# FASCICULE DE BREVET EUROPEEN

(11) **EP 4 660 075 B1**
(45) Date de publication et mention de la délivrance du brevet: **12.08.2026**
(21) Numéro de dépôt: 24222471.5
(22) Date de dépôt: 20.12.2024
(51) Int. Cl.: B64C 13/50

(54) **DISPOSITIF DE COMMANDE ET PROCÉDÉ DE SURVEILLANCE D'UN TEL DISPOSITIF DE COMMANDE**
STEUERVORRICHTUNG UND VERFAHREN ZUR ÜBERWACHUNG EINER SOLCHEN STEUERVORRICHTUNG
CONTROL DEVICE AND METHOD FOR MONITORING SUCH A CONTROL DEVICE

(30) Priorité: 04.06.2024 FR 2405848
(43) Date de publication de la demande: 10.12.2025
(73) Titulaire: Airbus Helicopters, 13725 Marignane Cedex (FR)
(72) Inventeur: DAGORN, Gaël, 67206 MITTELHAUSBERGEN (FR); McELHONE, John, 13006 MARSEILLE (FR); IZZO, Pascal, 13130 BERRE L'ETANG (FR); OTT, Adrien, 13300 SALON DE PROVENCE (FR)
(74) Mandataire: GPI Brevets

(56) Documents cités:
- US-A- 5 160 918
- US-B2- 7 411 521
- US-B2- 7 757 579

## Description

La présente invention se situe dans le domaine technique des commandes, et est plus particulièrement relative aux commandes de vol d'aéronefs.

L'invention concerne un dispositif de commande ainsi qu'un procédé de surveillance d'un tel dispositif de commande.

Un dispositif de commande comporte une poignée ou un levier mobile au moins autour d'un ou de plusieurs axes distincts, par exemple en rotation autour de deux axes orthogonaux. Une mobilité en translation du levier selon un axe supplémentaire, par exemple l'axe d'allongement du levier, peut aussi être disponible, généralement entre une position nominale, désignée également position « neutre », et une position dite « actionnée » ou « validée ».

Le dispositif de commande fournit un ou plusieurs signaux de commande porteurs d'informations relatives aux déplacements du levier par rapport à ses différents axes de mobilité. L'intégrité de ces signaux de commande est un sujet principal de sûreté de fonctionnement des dispositifs de commande, en particulier dans le cadre des dispositifs de commande de vol électrique d'un aéronef. En effet, des défaillances susceptibles d'affecter un dispositif de commande peuvent entraîner l'émission de signaux de commande erronés, qui ne seront pas détectés en tant que tels en l'absence de mécanismes de sûreté ou de surveillance. Le risque d'émission de signaux de commande erronés peut potentiellement être augmenté en présence d'une mobilité en translation du levier selon un axe d'allongement du levier.

Une technologie répandue pour identifier les déplacements du levier d'un dispositif de commande est basée sur l'utilisation de capteurs magnétiques. En effet, le déplacement du levier modifie un champ magnétique perçu par un ensemble de capteurs. Cette variation de champ magnétique est transformée par un calculateur en une valeur de déplacement du levier.

Cette technologie est par exemple décrite dans les documents US 7411521 et US 7757579.

En particulier, le document US 7411521 décrit un système de commande de comportant un aimant solidaire d'un levier et des capteurs fixes permettant une détection des déplacements du levier. Au moins deux capteurs, par exemple à effet Hall, sont utilisés par axe pour détecter le mouvement du levier par rapport à un support autour de cet axe. Le système de commande comprend aussi un agencement de surveillance pour surveiller un signal fourni par chacun des capteurs et permettre au système de commande d'être fonctionnel lorsque les signaux des capteurs se situent dans une plage prédéfinie.

Le document US 7757579 décrit quant à lui une poignée de commande pivotante par rapport à une base autour de deux axes . La base comporte des capteurs redondants pour détecter des mouvements de la poignée. Deux capteurs à effet hall sont par exemple utilisés par axe de rotation de la poignée et mesurent des variations d'un champ magnétique généré par un aimant solidaire de la poignée. Un microprocesseur compare et/ou combine les sorties des deux capteurs pour contrôler le fonctionnement de la poignée.

Une technologie alternative est décrite dans le document US 5532476 selon lequel un système de commande comporte un levier mobile par rapport à un boîtier et muni d'une zone réfléchissante. Plusieurs dispositifs à la fois émetteur et capteur de lumière sont agencés dans le boîtier de sorte à émettre une lumière dans un champ de déplacement de la zone réfléchissante du levier, lors des mouvements de ce levier. Le dispositif émetteur/capteur de lumière génère alors un signal électrique lorsqu'il capte une lumière réfléchie par la zone réfléchissante du levier, cette lumière devant être réfléchie vers les dispositif uniquement lorsque le levier est à sa position « neutre » ou à proximité de cette position « neutre ».

En outre, le document US 5160918 est également connu.

La présente invention a alors pour but de fournir une solution alternative pour la surveillance de l'intégrité d'un dispositif de commande en exploitant une mesure tridimensionnelle d'un champ magnétique modifié par le déplacement d'un levier de ce dispositif de commande.

La présente invention concerne tout d'abord un dispositif de commande muni d'un levier articulé à un support, le levier étant muni d'au moins un dipôle magnétique et mobile au moins en rotation par rapport au support autour d'un axe X,Y, le dispositif de commande comportant un dispositif de mesure configuré pour mesurer trois composantes d'un champ magnétique B généré par ledit au moins un dipôle magnétique à une position du dispositif de mesure, le dispositif de commande comportant un système de contrôle pour surveiller le dispositif de commande.

Le levier peut comporter un unique dipôle magnétique ou plusieurs dipôles magnétiques, agencés par exemple à une extrémité du levier. Le ou les dipôles magnétiques peuvent comporter un aimant permanent ou un électroaimant par exemple.

Le dispositif de mesure est configuré pour mesurer le champ magnétique B généré par le ou les dipôles magnétiques et capté à une position fixe par rapport au support, à savoir la position de ce dispositif de mesure. Les variations de ce champ magnétique B traduisent les déplacements du ou des dipôles magnétiques par rapport au support, et par suite, les déplacements du levier.

Le dispositif de mesure peut comporter un unique dispositif de mesure. Alternativement, le dispositif de mesure peut comporter plusieurs dispositifs de mesure. Les dispositifs de mesure peuvent être utilisés simultanément afin de fournir une mesure du champ magnétique B établie de façon connue en combinant les mesures de ces dispositifs de mesure, par exemple en calculant la valeur moyenne ou la valeur médiane, ou en redondance afin de pallier une éventuelle panne d'un des dispositifs de mesure.

Chacune des trois composantes du champ magnétique B peut être mesurée indépendamment, par le dispositif de mesure, selon respectivement trois directions de mesure U,V,W non coplanaires, formant un repère (U,V,W) solidaire du support. Ces trois directions de mesure U,V,W sont par exemple orthogonales deux à deux. Une ou plusieurs de ces trois directions de mesure U,V,W peuvent éventuellement être parallèles respectivement à un ou à plusieurs axes de mobilité du levier par rapport au support. Le dispositif de mesure peut comporter trois capteurs magnétiques, par exemple des capteurs à effet Hall, associés respectivement aux trois directions de mesure U,V,W afin de mesurer chacun une des trois composantes du champ magnétique *B.*

Le dispositif de commande selon l'invention est remarquable en ce que le système de contrôle est configuré pour signaler une anomalie à l'aide d'un alerteur lorsqu'une première fonction prédéterminée *F1* est supérieure à un premier seuil de champ magnétique, pendant une durée supérieure à un seuil de durée, et en ce que la première fonction prédéterminée *F1* est une fonction des trois composantes mesurées d'un champ magnétique courant *Bc* et d'une orientation estimée du levier, la première fonction prédéterminée *F1* ayant pour valeur une première norme *N1* d'une première différence vectorielle entre le champ magnétique courant *Bc* et un premier champ magnétique de référence *Bref1* déterminé à la position du dispositif de mesure, le premier champ magnétique de référence *Bref1* étant relatif à l'orientation estimée.

La première fonction prédéterminée *F1* permet de caractériser la première différence vectorielle entre le champ magnétique courant Bc et le premier champ magnétique de référence *Bref1* qui a été préalablement déterminé à la position du dispositif de mesure pour l'orientation estimée du levier. Ce premier champ magnétique de référence *Bref1* a été préalablement défini pour un dispositif de commande garanti sans défaut, pour plusieurs orientations de référence du levier relativement à l'axe ou aux axes X,Y. Une première base de données mémorisée associe ainsi plusieurs valeurs du premier champ magnétique de référence *Bref1* respectivement aux orientations de référence du levier. Ainsi, à chaque orientation de référence sont associées trois composantes du premier champ magnétique de référence *Bref1* par exemple selon respectivement les trois directions de mesure U,V,W. Les orientations de référence du levier mémorisées dans la première base de données couvrent l'ensemble des orientations possibles du levier relativement à l'axe ou aux axes X,Y, en prenant en compte un pas de discrétisation prédéfini.

Cette première fonction prédéterminée *F1* est donc fonction des trois composantes mesurées du champ magnétique courant *Bc,* des valeurs du premier champ magnétique de référence *Bref1* et d'une orientation estimée du levier.

L'orientation du levier par rapport au support peut être estimée à l'aide du champ magnétique *B* mesuré par le dispositif de mesure, et en particulier à l'aide de ses trois composantes. Un calculateur du système de contrôle peut, à l'aide d'une ou de plusieurs lois de transformation mémorisées, estimer cette orientation du levier en fonction des trois composantes mesurées d'un champ magnétique courant *Bc.* Le calculateur peut alternativement être situé à l'extérieur au dispositif de commande et par exemple être intégré à un système de centralisation du dispositif de commande, voire à un système avionique d'un aéronef lorsque le dispositif de commande équipe un aéronef.

Le dispositif de mesure peut également comporter un calculateur interne pour déterminer directement cette orientation estimée du levier en fonction du champ magnétique *B* mesuré.

Alternativement, l'orientation du levier par rapport au support peut être mesurée par des capteurs dédiés, par exemple des capteurs angulaires positionnés sur le ou les axes de mobilité X,Y du levier.

La première fonction prédéterminée *F1* fournit comme résultat la valeur d'une première norme *N1* de cette première différence vectorielle entre le champ magnétique courant *Bc* et le premier champ magnétique de référence *Bref1* relatif à l'orientation estimée. Cette première fonction prédéterminée *F1* peut être calculée par le calculateur du système de contrôle.

Cette première norme *N1* peut par exemple être une norme euclidienne ou une norme dite « infinie », voire une autre norme. En outre, des constantes a, b et c strictement positives peuvent être utilisées pour caractériser l'anisotropie de la précision de la mesure du dispositif de mesure. Dans ce cas, la première différence vectorielle étant un vecteur de cordonnées u, v, w, la première norme *N1* peut par exemple s'écrire selon la formule suivante N = max( *a.* |*u*|, *b.* |*v*|, *c*. l*w*l ) pour une norme infinie. Pour une norme euclidienne, la première norme *N1* peut alors s'écrire $N = \sqrt{a . {u}^{2} + b . {v}^{2} + c . {w}^{2}}$ *.*

Le calculateur du système de contrôle est aussi configuré pour comparer cette première norme *N1* avec un premier seuil de champ magnétique. Le premier seuil de champ magnétique a été préalablement défini, par exemple par essai et/ou simulations. Le système de contrôle signale ainsi une anomalie à l'aide d'un alerteur lorsque la première norme *N1* est supérieure au premier seuil de champ magnétique pendant une durée supérieure au seuil de durée. Cette anomalie peut en particulier être un défaut du dispositif de commande, par exemple une déformation voire une casse du levier, rendant invalide l'information fournie par le dispositif de commande.

L'alerteur peut alors signaler la présence d'un tel défaut par l'émission d'une alerte, par exemple visuelle ou sonore, voire haptique, pour informer de cette anomalie un opérateur ou un système extérieur auquel est relié le dispositif de commande, tel un système de centralisation ou un dispositif de pilotage, voire à un système avionique d'un aéronef. L'utilisation du seuil de durée permet avantageusement d'éviter l'émission de fausses alertes en cas de dépassement du premier seuil de champ magnétique par la première norme *N1* de façon transitoire, en l'occurrence pendant une durée inférieure ou égale au seuil de durée.

De plus, lorsque la première norme *N1* est supérieure au premier seuil de champ magnétique pendant une durée supérieure au seuil de durée, le système de contrôle peut interdire l'envoi par le dispositif de commande d'un signal de commande relatif à l'orientation estimée du levier, vers par exemple un système de centralisation d'une machine ou un dispositif de pilotage d'un aéronef ou tout autre dispositif relié au dispositif de commande. Un levier de secours du dispositif de commande peut éventuellement être disponible et mis en fonction afin de pallier l'anomalie détectée sur le levier du dispositif de commande.

Le dispositif de commande selon l'invention peut de plus comprendre une ou plusieurs des caractéristiques qui suivent, prises seules ou en combinaison.

Selon une possibilité, le premier champ magnétique de référence *Bref1* relatif à l'orientation estimée du levier peut être déterminé par interpolation à partir des valeurs prédéterminées et mémorisées du premier champ magnétique de référence *Bref1* associées respectivement aux valeurs d'orientations de référence du levier. Dans ce cas, le calculateur du système de contrôle estime, en fonction des valeurs prédéterminées et mémorisées du premier champ magnétique de référence *Bref1,* une valeur estimée du premier champ magnétique de référence *Bref1* pour une orientation de référence égale à l'orientation estimée du levier.

Alternativement, le premier champ magnétique de référence *Bref1* relatif à l'orientation estimée du levier peut être sélectionné parmi les valeurs prédéterminées et mémorisées du premier champ magnétique de référence *Bref1* associées respectivement aux valeurs d'orientations de référence du levier, la valeur sélectionnée étant associée à l'orientation de référence la plus proche de l'orientation estimée. Dans ce cas, le calculateur du système de contrôle recherche dans un premier temps l'orientation de référence la plus proche de l'orientation estimée par une méthode connue, puis sélectionne la valeur du premier champ magnétique de référence *Bref1* correspondant à cette orientation de référence la plus proche de l'orientation estimée du levier. Le pas de discrétisation doit alors être défini de sorte que les différences entre deux valeurs de premiers champs magnétiques de référence *Bref1* associés respectivement à deux orientations de référence adjacentes soient inférieures au premier seuil de champ magnétique. Une marge de sécurité peut éventuelle être prise en compte.

Selon une possibilité compatible avec les précédentes, le levier peut être mobile en rotation par rapport au support autour d'un unique axe X.

Alternativement, le levier peut être mobile en rotation par rapport au support autour d'un premier axe X et d'un deuxième axe Y. L'orientation estimée du levier est alors définie par rapport au support par deux angles *θ*,*ϕ* autour respectivement des premier et deuxième axes X,Y. Les premier et deuxième axes X,Y peuvent être orthogonaux l'un à l'autre, et éventuellement coplanaires.

Selon une possibilité compatible avec les précédentes, le levier peut être de forme allongée, et sensiblement rectiligne, selon un axe d'actionnement Z et mobile en translation par rapport au support selon cet axe d'actionnement Z entre une position de repos, dite aussi « position neutre » et une position actionnée. Un dispositif de rappel, par exemple élastique, peut permettre de ramener automatiquement le levier à la position de repos dès que le levier n'est pas ou plus sollicité par un opérateur.

De plus, le dispositif de commande peut être configuré pour détecter que le levier est en position actionnée lorsqu'une seconde fonction prédéterminée *F2* est inférieure à un second seuil de champ magnétique, la seconde fonction prédéterminée *F2* étant une fonction des trois composantes mesurées du champ magnétique courant *Bc* et de l'orientation estimée du levier, la seconde fonction prédéterminée F2 ayant pour valeur une seconde norme *N2* d'une seconde différence vectorielle entre le champ magnétique courant Bc et un second champ magnétique de référence *Bref2* déterminé à la position du dispositif de mesure, le second champ magnétique de référence *Bref2* étant relatif à l'orientation estimée du levier.

Le second champ magnétique de référence *Bref2* a été préalablement défini pour un dispositif de commande garanti sans défaut, le levier étant à la position actionnée selon l'axe d'actionnement Z, pour plusieurs orientations de référence du levier relativement à l'axe ou aux axes X,Y. Une seconde base de données mémorisée associe ainsi plusieurs valeurs du second champ magnétique de référence *Bref2* respectivement aux orientations de référence du levier. Les orientations de référence du levier mémorisées dans la seconde base de données couvrent l'ensemble des orientations possibles du levier relativement à l'axe ou aux axes X,Y, en prenant en compte le pas de discrétisation prédéfini.

Les orientations de référence du levier mémorisées dans la seconde base de données sont de préférence identiques à celles mémorisées dans la première base de données. Les première et seconde bases de données peuvent dans ce cas former une unique base de données mémorisant les orientations de référence du levier et leur associant respectivement plusieurs valeurs du premier champ magnétique de référence *Bref1* et plusieurs valeurs du second champ magnétique de référence *Bref2.*

Eventuellement, les orientations de référence du levier mémorisées dans la première base de données et la seconde base de données peuvent être différentes.

A l'instar du premier champ magnétique de référence *Bref1,* le second champ magnétique de référence *Bref2* relatif à l'orientation estimée du levier peut être déterminé par interpolation à partir des valeurs prédéterminées et mémorisées du second champ magnétique de référence *Bref2* associées respectivement aux valeurs d'orientations de référence du levier ou sélectionné parmi ces valeurs du second champ magnétique de référence *Bref2* en fonction de l'orientation de référence la plus proche de l'orientation estimée.

La seconde fonction prédéterminée *F2* permet ainsi de caractériser la seconde différence vectorielle entre le champ magnétique courant *Bc* et le second champ magnétique de référence *Bref2* qui a été préalablement déterminé à la position du dispositif de mesure pour l'orientation estimée du levier.

La seconde fonction prédéterminée *F2* est donc fonction des trois composantes mesurées du champ magnétique courant *Bc,* des valeurs du second champ magnétique de référence *Bref2* et d'une orientation estimée du levier. A ce titre, la seconde fonction prédéterminée *F2* est différente de la première fonction prédéterminée *F1.*

La seconde fonction prédéterminée *F2* fournit comme résultat la valeur d'une seconde norme *N2* de cette seconde différence vectorielle entre le champ magnétique courant *Bc* et le second champ magnétique de référence *Bref2* relatif à l'orientation estimée. Cette seconde fonction prédéterminée *F2* peut être calculée par le calculateur du système de contrôle.

A l'instar de la première norme *N1,* la seconde norme *N2* peut par exemple être une norme euclidienne ou une norme infinie, voire une autre norme, utilisant éventuellement des constantes a', b' et c' strictement positives pour caractériser l'anisotropie de la précision de la mesure du dispositif de mesure. En particulier, la première norme *N1* et la seconde norme *N2* peuvent être identiques, les constantes a', b' et c' étant alors égales respectivement aux constantes a, b et c.

Le calculateur du système de contrôle est alors configuré pour comparer cette seconde norme *N2* avec un second seuil de champ magnétique. Le second seuil de champ magnétique a été préalablement défini, par exemple par essai et/ou simulations. Le système de contrôle peut alors signaler que le levier est en position actionnée relativement à l'axe d'actionnement Z, par exemple à l'aide de l'alerteur lorsque la seconde norme *N2* est inférieure au second seuil de champ magnétique pendant une durée supérieure au seuil de durée.

Le second seuil de champ magnétique peut être inférieur, voire égal, au premier seuil de champ magnétique.

La présente invention a également pour objet un procédé de surveillance d'un dispositif de commande tel que précédemment décrit. Le dispositif de commande est ainsi muni d'un levier, articulé à un support et mobile au moins en rotation par rapport au support autour d'un axe X,Y. Le levier est muni d'un ou de plusieurs dipôles magnétiques et le dispositif de commande comporte un dispositif de mesure configuré pour mesurer trois composantes d'un champ magnétique B généré par le ou les dipôles magnétiques à une position du dispositif de mesure.

Un calculateur intégré au dispositif de contrôle ou extérieur au dispositif de commande peut comporter une mémoire ou être relié à une mémoire, cette mémoire pouvant par exemple stocker des instructions ou algorithmes qui permettent de réaliser le procédé de surveillance lorsqu'ils sont exécutés. La mémoire peut aussi stocker un programme d'ordinateur destiné à être exécuté par le calculateur afin de mettre en œuvre le procédé de surveillance.

Le procédé de surveillance selon l'invention comporte les étapes suivantes :
- mesure des trois composantes d'un champ magnétique courant Bc par le dispositif de mesure,
- détermination d'une orientation estimée du levier par rapport au support, en fonction des trois composantes par application d'une loi de transformation mémorisée,
- détermination d'un premier champ magnétique de référence *Bref1* pour l'orientation estimée du levier à partir de valeurs prédéterminées et mémorisées du premier champ magnétique de référence *Bref1,* les valeurs étant associées respectivement à des orientations de référence du levier,
- calcul d'une première fonction prédéterminée *F1* en fonction des trois composantes mesurées du champ magnétique courant *Bc,* de l'orientation estimée du levier et du premier champ magnétique de référence *Bref1* relatif à cette orientation estimée, la première fonction prédéterminée *F1* ayant pour valeur une première norme *N1* d'une première différence vectorielle entre le premier champ magnétique de référence *Bref1* et le champ magnétique courant *Bc,* et
- signalement d'une anomalie à l'aide d'un alerteur lorsque la première fonction prédéterminée *F1* est supérieure à un premier seuil de champ magnétique pendant une durée supérieure à un seuil de durée.

Lors de l'étape de mesure, le dispositif de mesure peut fournir pour chacune des trois composantes du champ magnétique courant Bc un signal ou des signaux bruts porteur de mesures brutes de ces trois composantes réalisées par le dispositif de mesure, voire respectivement par les trois capteurs magnétiques qu'il comporte. Le dispositif de mesure peut alternativement comporter un calculateur interne afin de traiter ces mesures brutes, par exemple via un filtrage ou un échantillonnage usuel, voire l'application de transformations, et fournir un signal ou des signaux traités porteur des trois composantes du champ magnétique courant *Bc* en fonction de ces mesures brutes ainsi traitées.

Lors de l'étape de détermination d'une orientation estimée du levier, cette orientation estimée peut être calculée par le calculateur mettant en œuvre le procédé en fonction du ou des signaux fournis par le dispositif de mesure et porteurs d'informations relatives aux trois composantes du champ magnétique courant *Bc,* par application d'une ou de plusieurs lois de transformation stockées dans la mémoire du calculateur ou reliée à ce calculateur. Alternativement, cette orientation estimée du levier peut être calculée par le calculateur interne du dispositif de mesure via l'application de cette ou des lois de transformation stockées dans une mémoire du dispositif de mesure.

Le calculateur reçoit un ou plusieurs signaux, par exemple du dispositif de mesure, et émet des signaux, par exemple vers l'alerteur, qui peuvent être électriques ou optiques, numériques ou analogiques.

Ensuite, lors de l'étape de détermination d'un premier champ magnétique de référence *Bref1,* ce premier champ magnétique de référence *Bref1* relatif à l'orientation estimée du levier est déterminé à partir de valeurs prédéterminées et mémorisées du premier champ magnétique de référence *Bref1* et associées respectivement à des orientations de référence du levier. Les valeurs du premier champ magnétique de référence *Bref1* et des orientations de référence associées sont stockées dans une première base de données mémorisées dans la mémoire associée au calculateur du dispositif de commande. Ce premier champ magnétique de référence *Bref1* a été préalablement défini pour un dispositif de commande garanti sans défaut.

Au cours de cette étape, le premier champ magnétique de référence *Bref1* relatif à l'orientation estimée du levier peut être déterminé par interpolation à partir des valeurs de la première base de données du premier champ magnétique de référence *Bref1* et des orientations de référence du levier associées.

Alternativement, l'orientation estimée du levier peut être comparée, avec les orientations de référence du levier afin de rechercher de façon connue l'orientation de référence la plus proche de l'orientation estimée. Dans ce but, l'étape de détermination d'un premier champ magnétique de référence *Bref1* peut comporter une sous étape de comparaison de l'orientation estimée et les orientations de référence. Ensuite, la valeur du premier champ magnétique de référence *Bref1* associée à l'orientation de référence la plus proche de l'orientation estimée dans la première base de données est sélectionnée par le procédé selon l'invention.

Lors de l'étape de calcul, une première fonction prédéterminée *F1* est calculée et a pour valeur une première norme *N1,* par exemple euclidienne ou infinie, d'une première différence vectorielle entre le premier champ magnétique de référence *Bref1* relatif à l'orientation estimée du levier et le champ magnétique courant *Bc.* Cette première norme *N1* est donc fonction des trois composantes mesurées du champ magnétique courant *Bc,* de l'orientation estimée du levier et de la valeur précédemment déterminée du premier champ magnétique de référence *Bref1* et relative à cette orientation estimée.

Enfin, un étape de signalement est effectuée afin de signaler une anomalie à l'aide d'un alerteur lorsque la première fonction prédéterminée *F1* est supérieure à un premier seuil de champ magnétique pendant une durée supérieure à un seuil de durée. Ce signalement peut être visuel, à l'aide d'un voyant et/ou d'un écran de l'alerteur, sonore, via un haut-parleur de l'alerteur, ou encore haptique.

De la sorte, le procédé de surveillance selon l'invention permet de surveiller que l'orientation estimée du levier est valide et peut être utilisée de façon fiable pour commander par exemple le déplacement d'une machine ou d'un véhicule, tel un aéronef. L'orientation estimée est considérée comme étant valide lorsqu'aucune anomalie n'est détectée.

Ces étapes peuvent être répétées consécutivement, de façon continue, tant que la machine à laquelle est relié le dispositif de commande fonctionne, indépendamment du déroulement de ces étapes, et des valeurs de la première fonction prédéterminée *F1.*

Alternativement, ces étapes peuvent être répétées plusieurs fois consécutivement en fonction du déroulement de ces étapes, et en particulier tant que, simultanément, la première fonction prédéterminée *F1* est supérieure au premier seuil de champ magnétique et la durée est inférieure ou égale au seuil de durée ou tant que la première fonction prédéterminée *F1* est inférieure ou égale au premier seuil de champ magnétique.

En outre, la durée qui est comparée avec le seuil de durée est initialisée à une valeur initiale, mémorisée, lors d'une première itération de ces étapes. Une initialisation préalable peut donc être réalisée dans ce but avant le déroulement de ces étapes. Cette valeur initiale de la durée est égale par exemple à zéro.

Cette durée fait ainsi fonction de compteur et s'incrémente ensuite en fonction du temps qui s'écoule pendant le déroulement de ces étapes.

Une initialisation de la durée à la valeur initiale est également effectuée, d'une part, à chaque itération, tant que la première fonction prédéterminée *F1* est inférieure ou égale au premier seuil de champ magnétique ainsi que, d'autre part, dès que simultanément la première fonction prédéterminée *F1* devient inférieure ou égale au premier seuil de champ magnétique, après avoir été supérieure à ce premier seuil de champ magnétique, et la durée est inférieure ou égale au seuil de durée.

Le procédé de surveillance selon l'invention peut de plus comprendre une ou plusieurs des caractéristiques qui suivent, prises seules ou en combinaison.

Selon une possibilité, suite au signalement d'une anomalie, le procédé de surveillance peut comporter une désactivation du levier et une activation d'un levier de secours que comporte le dispositif de commande.

En effet, en cas d'anomalie détectée, le levier ne peut plus être utilisé de façon fiable. De la sorte, ce levier est désactivé, aucun signal de commande relatif au déplacement de ce levier n'étant émis par le dispositif de commande. Alternativement, les signaux de commande émis par le dispositif de commande peuvent être ignorés.

De plus, un levier de secours du dispositif de commande peut être activé par l'émission d'un signal d'activation par le calculateur. Le levier de secours peut alors être mis en fonctionnement pour être utilisé par un opérateur en remplacement du levier défectueux. De la sorte, le dispositif de commande peut toujours, grâce au levier de secours, commander par exemple le déplacement d'une machine ou d'un véhicule, en émettant un signal de commande en fonction du ou des déplacements de ce levier de secours.

Selon une possibilité compatible avec les précédentes, le procédé de surveillance peut comporter des étapes additionnelles lorsque le levier est mobile en translation selon un axe d'actionnement Z entre une position de repos et une position actionnée, le levier étant de forme allongée selon cet axe d'actionnement Z. Ces étapes additionnelles permettent de déterminer que le levier est à la position actionnée.

Tout d'abord, une détermination d'un second champ magnétique de référence *Bref2* relatif à l'orientation estimée est réalisée par le calculateur. Ce second champ magnétique de référence *Bref2* est déterminé à partir de valeurs prédéterminées et mémorisées du second champ magnétique de référence *Bref2* associées respectivement à des orientations de référence du levier, le second champ magnétique de référence *Bref2* caractérisant la position actionnée selon l'axe d'actionnement Z du levier, le dispositif de commande étant garanti sans défaut. La valeur de ce second champ magnétique de référence *Bref2* relatif à l'orientation estimée peut être déterminée, comme pour le premier champ magnétique de référence *Bref1,* par interpolation des valeurs prédéterminées et mémorisées du second champ magnétique de référence *Bref2* ou sélectionnée parmi ces valeurs prédéterminées et mémorisées du second champ magnétique de référence *Bref2* en fonction de l'orientation de référence la plus proche de l'orientation estimée du levier.

Ensuite, un calcul d'une seconde fonction prédéterminée *F2* est réalisée par le calculateur en fonction des trois composantes mesurées du champ magnétique courant *Bc,* de l'orientation estimée du levier et du second champ magnétique de référence *Bref2* relatif à cette orientation estimée.

Cette seconde fonction prédéterminée *F2* a pour valeur une seconde norme *N2,* par exemple euclidienne ou infinie, d'une seconde différence vectorielle entre le second champ magnétique de référence *Bref2* et le champ magnétique courant *Bc.*

Enfin, une détermination de la position actionnée du levier est effectuée lorsque la seconde fonction prédéterminée *F2* est inférieure à un second seuil de champ magnétique.

Ces étapes sont de préférence répétées plusieurs fois consécutivement et de façon continue.

L'invention et ses avantages apparaîtront avec plus de détails dans le cadre de la description qui suit avec des exemples donnés à titre illustratif en référence aux figures annexées qui représentent :
- la figure 1, une vue d'un dispositif de commande selon l'invention,
- la figure 2, une vue d'un dispositif de commande selon l'invention, et
- la figure 3, un schéma synoptique d'un procédé selon l'invention.

Les éléments présents dans plusieurs figures distinctes sont affectés d'une seule et même référence.

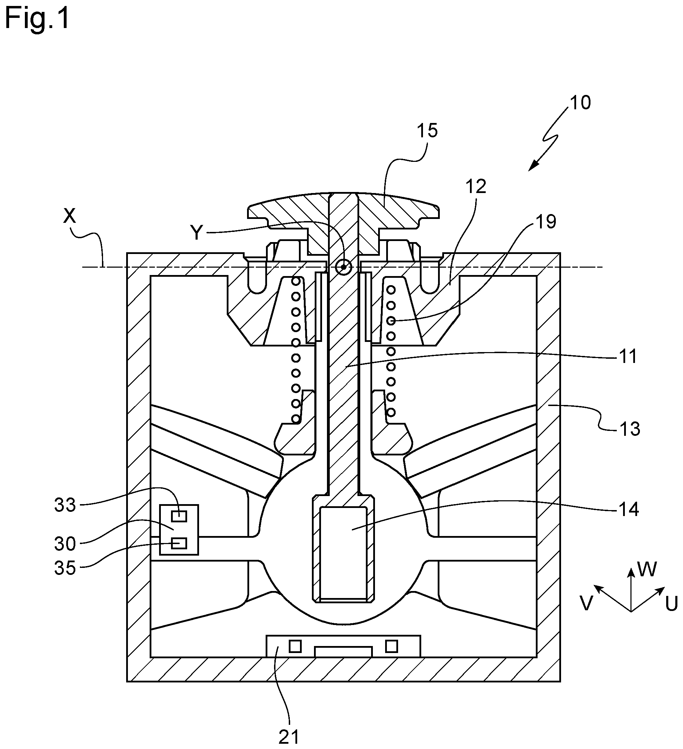

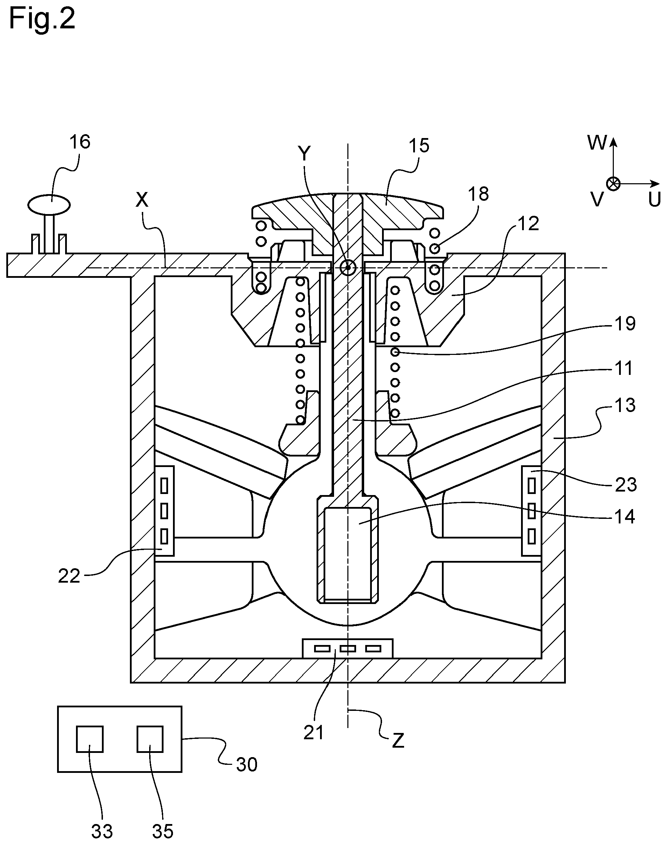

Les figures 1 et 2 représentent deux exemples de dispositif de commande selon l'invention.

Quelle que soit la réalisation de l'invention, un dispositif de commande 10 comporte un support 12 et un levier 11 articulé à ce support 12, et mobile au moins en rotation par rapport à ce support 12 autour d'au moins un axe de mobilité, voire de plusieurs axes de mobilité. Le levier 11 est muni d'un ou de plusieurs dipôles magnétiques 14, positionnés par exemple à une de ses extrémités. Un dipôle magnétique 14 peut comporter un aimant permanent ou un électroaimant configuré pour être alimenté par un courant électrique.

Le dispositif de commande 10 comporte au moins un dispositif de mesure 21-23 configuré pour mesurer trois composantes d'un champ magnétique *B* généré par le ou les dipôles magnétiques 14 à la position de ce dispositif de mesure 21-23. Le dispositif de mesure 21-23 peut comporter trois capteurs magnétiques afin de mesurer respectivement ces trois composantes d'un champ magnétique B. Ces capteurs magnétiques sont par exemple des capteurs à effet Hall et peuvent ainsi former un Teslamètre à trois axes.

Ces trois composantes du champ magnétique *B* sont mesurées respectivement selon trois directions de mesure U,V,W non coplanaires, formant un repère (U,V,W) solidaire du support 12. Ces trois directions de mesure U,V,W sont par exemple orthogonales deux à deux.

Chaque capteur magnétique peut fournir un signal brut porteur de mesures brutes réalisées par ce capteur magnétique. Le dispositif de mesure 21-23 peut aussi comporter un calculateur intégré afin de traiter ces mesures brutes, par exemple via un filtrage ou un échantillonnage usuel, voire l'application de transformations, et fournir un signal traité porteur de ces mesures brutes ainsi traitées.

Le dispositif de commande 10 comporte aussi un système de contrôle 30 configuré pour surveiller l'intégrité du dispositif de commande 10. Le système de contrôle 30 peut comporter un calculateur 33 et un alerteur 35.

Le dispositif de commande 10 peut comporter un boîtier 13 dans lequel sont disposés notamment au moins partiellement le levier 11, le ou les dipôles magnétiques 14, ainsi que le ou les dispositifs de mesure 21-23. Le support 12 est alors solidaire du boîtier 13. Le boîtier 13 peut comporter un isolant magnétique usuel de sorte que l'intérieur de ce boîtier 13 soit isolé magnétiquement de l'environnement extérieur, et par exemple protégé ainsi du champ magnétique terrestre ou de tout champ magnétique dans lequel peut être positionné le dispositif de commande 10 selon l'invention. Dans ce cas, le dispositif de mesure 21-23 peut mesurer le champ magnétique *B* généré par le ou les dipôles magnétique 14 sans que celui-ci soit perturbé ou modifié par un autre champ magnétique.

Le dispositif de commande 10 selon l'invention peut être intégré ou relié à une machine, pour par exemple commander les déplacements d'un élément de la machine, voire de la machine en totalité. Le dispositif de commande 10 selon l'invention peut aussi être intégré à un véhicule, notamment un aéronef. Le dispositif de commande 10 peut par exemple être relié , par une liaison filaire ou sans fil, à un système de pilotage d'un aéronef pour commander les déplacements de cet aéronef.

Selon un premier exemple représenté sur la figure 1, le levier 11 est mobile en rotation par rapport au support 12 autour d'un premier axe X et d'un deuxième axe Y. Les premier et deuxième axes X,Y ne sont pas parallèles, et sont par exemple perpendiculaires l'un par rapport à l'autre. Le dispositif de commande 10 peut comporter un premier dispositif de rappel élastique 18 configuré pour maintenir ou ramener le levier 11 à une position d'équilibre autour des premier et deuxième axes X,Y. Le dispositif de commande 10 selon ce premier exemple comporte un seul dispositif de mesure 21 positionné dans le boîtier 13. Le système de contrôle 30 est agencé à l'intérieur du boîtier 13 du dispositif de commande 10.

Selon ce premier exemple, les trois directions de mesure U,V,W ne sont pas parallèles aux premier et deuxième axes X,Y.

Selon un deuxième exemple représenté sur la figure 2, le levier 11 est de forme allongée selon un axe d'actionnement Z. Le levier 11 est mobile en rotation par rapport au support 12 autour d'un premier axe X et d'un deuxième axe Y, non parallèles, voire perpendiculaires l'un par rapport à l'autre, ainsi qu'en translation selon l'axe d'actionnement Z entre une position de repos et une position actionnée. L'axe d'actionnement Z est sécant à un plan formé par les premier et deuxième axes X,Y. Selon ce deuxième exemple, les trois directions de mesure U,V,W sont respectivement parallèles aux premier et deuxième axes X,Y ainsi qu'à l'axe d'actionnement Z lorsque le levier 11 est à une position d'équilibre autour des premier et deuxième axes X,Y.

Le dispositif de commande 10 comporte un premier dispositif de rappel élastique 18 configuré pour ramener le levier 11 à la position d'équilibre autour des premier et deuxième axes X,Y, ainsi qu'un second dispositif de rappel élastique 19 configuré pour maintenir ou ramener le levier 11 à la position neutre selon l'axe d'actionnement Z. Le dispositif de commande 10 comporte trois dispositifs de mesure 21-23 positionnés à différentes positions dans le boîtier 13. Ces trois dispositifs de mesure 21-23 peuvent être utilisés simultanément afin de fournir une mesure du champ magnétique B établie de façon connue en combinant les mesures de ces trois dispositifs de mesure 21-23, ou en redondance afin de pallier une éventuelle panne d'un de ces dispositifs de mesure 21-23. Le système de contrôle 30 est agencé à l'extérieur du boîtier 13 du dispositif de commande 10.

Les premier et second dispositifs de rappel élastique 18,19 peuvent comporter par exemple un ou plusieurs ressorts.

Selon les deux exemples représentés, le dispositif de commande 10 comporte un organe de commande 15 solidaire du levier 11, et fixé au levier 11 à une extrémité opposée à l'extrémité comportant le dipôle magnétique 14. L'organe de commande 15 permet à un opérateur de déplacer le levier 11 autour du premier et/ou du deuxième axe X,Y, voire selon l'axe d'actionnement Z le cas échéant. L'organe de commande 15 représenté sur les figures 1 et 2 peut être manipulé à l'aide d'un doigt, par exemple le pouce d'un opérateur. Un organe de commande 15 peut alternativement comporter une zone de préhension pour être maintenu et déplacé à l'aide de la main d'un opérateur.

Indépendamment des deux exemples représentés, l'alerteur 35 du système de contrôle 30 peut comporter un ou plusieurs voyants, un écran et/ou un haut-parleur. Le calculateur 33 du système de contrôle 30 peut comprendre par exemple au moins un processeur, voire au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue.

Le calculateur 33 est relié par voie filaire ou non filaire au dispositif de mesure 21-23 ainsi qu'à l'alerteur 35. Des signaux, électriques ou optiques, analogiques ou numériques, peuvent alors être échangés entre le calculateur 33 et, d'une part, le dispositif de mesure 21-23 et, d'autre part, l'alerteur 35.

De plus, des instructions ou un programme d'ordinateur peuvent être stockés dans une mémoire du calculateur 33 ou dans une mémoire reliée à ce calculateur 33. Le calculateur 33 peut alors exécuter ces instructions ou ce programme d'ordinateur pour mettre en œuvre un procédé de surveillance du dispositif de commande 10 afin de surveiller son intégrité.

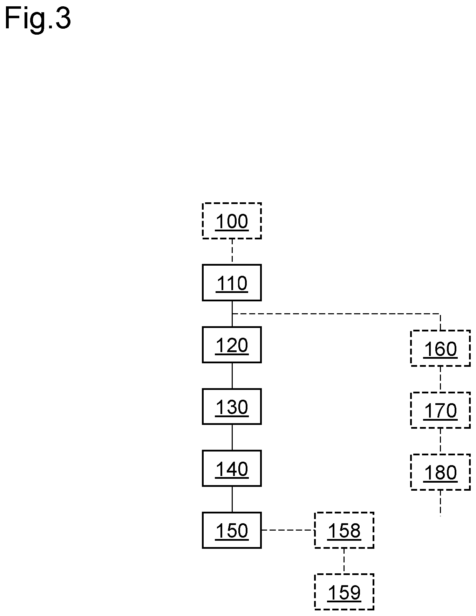

La figure 3 représente un schéma synoptique de ce procédé surveillance du dispositif de commande 10. Ce procédé peut comporter les étapes suivantes.

Tout d'abord, une mesure 110 des trois composantes d'un champ magnétique courant *Bc* généré par le dipôle magnétique 14 est effectuée par le dispositif de mesure 21-23. Le dispositif de mesure 21-23 peut transmettre au calculateur 33 un signal porteur d'informations relatives à ces trois composantes du champ magnétique courant *Bc.*

Ensuite, une détermination 120 d'une orientation estimée du levier 11 par rapport au support 12 est effectuée par exemple par le calculateur 35. Cette orientation estimée du levier 11 est déterminée en fonction des trois composantes du champ magnétique courant *Bc* à l'aide d'une loi de transformation mémorisée dans la mémoire reliée au calculateur 35 ou la mémoire du calculateur 35.

Une détermination 130 d'un premier champ magnétique de référence *Bref1* pour l'orientation estimée est alors réalisée par le calculateur 35 à partir de valeurs prédéterminées et mémorisées du premier champ magnétique de référence *Bref1,* des trois composantes d'un champ magnétique courant *Bc* et de l'orientation estimée du levier 11. Les valeurs prédéterminées et mémorisées du premier champ magnétique de référence *Bref1* sont associées respectivement à des orientations de référence du levier 11 et comportent trois composantes selon les directions de mesure U,V,W pour chaque premier champ magnétique de référence *Bref1.* Un pas de discrétisation prédéfini sépare les orientations de référence du levier 11.

Les valeurs prédéterminées et mémorisées de ce premier champ magnétique de référence *Bref1* ont été préalablement définies pour un dispositif de commande 10 garanti sans défaut et sont stockées, avec les orientations de référence du levier 11, dans la mémoire du calculateur 33 ou reliée au calculateur 33. Les valeurs prédéterminées et mémorisées de ce premier champ magnétique de référence *Bref1* caractérisent ainsi des positions dites « normales » ou « nominales » du dipôle magnétique 14, et par suite du levier 11, à savoir lorsque le levier 11, et par suite le dispositif de commande 10, fonctionne correctement. Les valeurs prédéterminées et mémorisées de ce premier champ magnétique de référence *Bref1* ont par exemple été mesurées par le dispositif de mesure 21-23 et forment avec les orientations de référence une première base de données.

Le premier champ magnétique de référence *Bref1* relatif à l'orientation estimée du levier 11 peut être déterminé par le calculateur 33 par interpolation à partir de ces valeurs du premier champ magnétique de référence *Bref1* et des orientations de référence du levier associées mémorisées pour en déduire le premier champ magnétique de référence *Bref1* correspondant à l'orientation estimée du levier 11.

Alternativement, une sous étape de comparaison de l'orientation estimée du levier 11 et des orientations de référence de la première base de données peut être effectuée le calculateur 33 par afin de trouver de façon connue l'orientation de référence la plus proche de l'orientation estimée. Ensuite, une sous étape de sélection de la valeur du premier champ magnétique de référence *Bref1* associée à cette orientation de référence la plus proche de l'orientation estimée est réalisée par le calculateur 33.

Par la suite, un calcul 140 d'une première fonction prédéterminée *F1* est réalisé par le calculateur 33 en fonction des trois composantes mesurées du champ magnétique courant *Bc,* de l'orientation estimée du levier 11 et du premier champ magnétique de référence *Bref1* relatif à l'orientation estimée. La première fonction prédéterminée *F1* a pour valeur une première norme *N1* d'une première différence vectorielle entre le premier champ magnétique de référence *Bref1* et le champ magnétique courant Bc.

Cette première norme *N1* peut par exemple être une norme euclidienne ou une norme dite « infinie », voire une autre norme. De plus, l'anisotropie de la précision de la mesure du dispositif de mesure 21-23 peut être prise en compte par cette première norme *N1* par l'intermédiaire de constantes a, b et c strictement positives. Dans ce cas, la première norme *N1* peut par exemple s'écrire, pour la première différence vectorielle de coordonnées (u, v, w) dans le repère (U,V,W), selon les formules N = max( *a.* |*u*|, *b.* l*v*l, *c*. l*w*l ) pour une norme infinie, et $N = \sqrt{a . {u}^{2} + b . {v}^{2} + c . {w}^{2}}$, pour une norme euclidienne.

Enfin, un signalement 150 d'une anomalie est réalisé par l'intermédiaire de l'alerteur 35 lorsque la première fonction prédéterminée *F1* est supérieure à un premier seuil de champ magnétique pendant une durée supérieure à un seuil de durée. Dans ce but, le calculateur 33 émet un signal qui est transmis à l'alerteur 35, ce signal étant porteur d'une information de la présence d'une telle anomalie.

La première fonction prédéterminée *F1* est supérieure au premier seuil de champ magnétique lorsque le dipôle magnétique 14, et donc le levier 11, est écarté de sa position nominale. Cet état peut être transitoire, lors d'une manipulation et un déplacement du levier 11 par exemple. Ainsi, si cet état est maintenu pendant une durée inférieure au seuil de durée, aucune anomalie n'est signalée. Par contre, si cet état est maintenu pendant une durée supérieure au seuil de durée, alors le levier 11 est resté éloigné de la position nominale trop longtemps, ce qui peut être le signe de la présence d'un défaut, tel qu'une déformation ou une rupture du levier 11.

Ce signalement 150 permet ainsi de signaler l'anomalie à un opérateur, de façon visuelle, sonore, voire haptique. De la sorte, le procédé de surveillance selon l'invention permet de surveiller que l'orientation estimée du levier 11 est conforme aux positions nominales et donc valide.

Dans ce cas, le dispositif de commande 10 peut alors émettre un signal porteur d'une information relative à cette orientation estimée du levier 11 qui peut être utilisée de façon fiable pour commander par exemple le déplacement d'une machine ou d'un véhicule.

Ces étapes 110-150 peuvent être appliquées aux deux exemples de dispositif de commande 10 représentés sur les figures 1 et 2, en particulier indépendamment d'une mobilité en translation du levier 11 selon l'axe d'actionnement Z.

Ces étapes 110-150 peuvent être répétées plusieurs fois consécutivement selon leur déroulement, et en particulier tant que le levier 11 est écarté de sa position nominale de façon transitoire, à savoir que la première fonction prédéterminée *F*1 est supérieure au premier seuil de champ magnétique et la durée est inférieure ou égale au seuil de durée. Ces étapes 110-150 peuvent aussi être répétées tant que le levier 11 est proche de ses positions nominales, à savoir que la première fonction prédéterminée *F*1 est inférieure ou égale au premier seuil de champ magnétique. Le seuil de durée est par exemple égal à 500 millisecondes.

De plus, le procédé selon l'invention peut comporter une initialisation 100 de la durée pendant laquelle se déroule ce procédé. Lors de cette initialisation, la durée est modifiée pour être égale à une valeur initiale, mémorisée dans la mémoire du calculateur 33 ou reliée au calculateur 33. Cette valeur initiale de la durée est égale par exemple à zéro.

Cette initialisation 100 peut être réalisée par l'intermédiaire du calculateur 33, lors d'une première itération de ces étapes 110-150.

Une initialisation 100 peut également être effectuée à chaque itération de ces étapes 110-150, tant que le levier 11 est proche de ses positions nominales, à savoir tant que la première fonction prédéterminée *F1* est inférieure ou égale au premier seuil de champ magnétique. Une initialisation 100 peut encore être effectuée dès que le levier 11 se rapproche de ses positions nominales après s'en être écarté, à savoir dès que la première fonction prédéterminée *F1* devient inférieure ou égale au premier seuil de champ magnétique, après avoir été supérieure à ce premier seuil de champ magnétique, la durée étant inférieure ou égale au seuil de durée. Ainsi, la durée n'est pas initialisée tant le levier 11 est écarté de sa position nominale de façon transitoire, à savoir que la première fonction prédéterminée *F1* est supérieure au premier seuil de champ magnétique et la durée est inférieure ou égale au seuil de durée.

Pendant le déroulement de ces étapes 110-150, et en l'absence d'initialisation 100, la durée s'incrémente en fonction du temps qui s'écoule.

Par ailleurs, en cas d'anomalie détectée le signalement 150 peut comporter une désactivation 158 du levier 11 et une activation 159 d'un levier de secours 16 du dispositif de commande 10. De la sorte, suite à la détection d'une anomalie, le dispositif de commande 10 ne peut pas fournir, via le levier 11, une information fiable relative à l'orientation estimée du levier 11. En conséquence, la désactivation 158 du levier 11 a pour effet d'inhiber l'émission d'un signal de commande du dispositif de commande 10. Alternativement, le calculateur 33 peut émettre un signal spécifique de sorte que les signaux de commande émis par le dispositif de commande 10 soient ignorés.

Ensuite, l'activation 159 d'un levier de secours 16 est effective, par exemple suite à l'émission d'un signal d'activation par le calculateur 33. Cette activation 159 du levier de secours 16 permet de mettre en fonctionnement le levier de secours 16 du dispositif de commande 10. De la sorte, le dispositif de commande 10 reste fonctionnel, grâce au levier de secours 16, pour commander par exemple le déplacement d'une machine ou d'un véhicule, en émettant un signal de commande en fonction du ou des déplacements de ce levier de secours 16.

Le procédé de surveillance selon l'invention peut aussi comporter, dans le cas de l'exemple de dispositif de commande 10 représenté sur la figure 2, des étapes additionnelles 160-180 suivantes pour déterminer la position actionnée du levier 11. Ces étapes additionnelles 160-180 permettent de déterminer si le levier 11 est à la position actionnée.

Tout d'abord, une détermination 160 d'un second champ magnétique de référence *Bref2* pour l'orientation estimée du levier 11 est effectuée par le calculateur 33, à partir de valeurs prédéterminées et mémorisées de ce second champ magnétique de référence *Bref2* associées respectivement aux orientations de référence du levier 11, et en fonction de l'orientation estimée du levier et des composantes mesurées du champ magnétique courant *Bc.* Ce second champ magnétique de référence *Bref2* caractérise la position actionnée du levier 11 selon l'axe d'actionnement Z, le dispositif de commande 10 étant garanti sans défaut. Ces valeurs prédéterminées et mémorisées du second champ magnétique de référence *Bref2* ont été préalablement définies pour un dispositif de commande 10 garanti sans défaut et sont stockées, avec les orientations de référence du levier 11, dans la mémoire du calculateur 33 ou reliée au calculateur 33.

Les valeurs prédéterminées et mémorisées de ce second champ magnétique de référence *Bref2* ont par exemple été mesurées par le dispositif de mesure 21-23 et forment avec les orientations de référence une seconde base de données.

La valeur de ce second champ magnétique de référence *Bref2* relatif à l'orientation estimée peut être déterminée, comme pour le premier champ magnétique de référence *Bref1,* par interpolation des valeurs prédéterminées et mémorisées du second champ magnétique de référence *Bref2* ou sélectionnée parmi ces valeurs du second champ magnétique de référence *Bref2* en fonction de l'orientation de référence la plus proche de l'orientation estimée du levier 11.

Ensuite, un calcul 170 d'une seconde fonction prédéterminée *F2* est effectuée par le calculateur 33 en fonction des trois composantes mesurées du champ magnétique courant Bc, de l'orientation estimée du levier 11 et des valeurs prédéterminées et mémorisées du second champ magnétique de référence *Bref2.* La seconde fonction prédéterminée *F2* a pour valeur une seconde norme *N2* d'une seconde différence vectorielle entre le second champ magnétique de référence *Bref2* et le champ magnétique courant *Bc.*

Comme pour la première norme *N1,* la seconde norme *N2* peut être une norme euclidienne ou une norme infinie, voire une autre norme. De plus, l'anisotropie de la précision de la mesure du dispositif de mesure 21-23 peut être prise en compte par l'intermédiaire de constantes a', b' et c' strictement positives. Dans ce cas, la seconde norme *N2* peut par exemple s'écrire, pour la seconde différence vectorielle de coordonnées (u',v',w') dans le repère (U,V,W), selon les formules *N2* = max( *a*'.|*u*'|,*b*'.|*v*'|,*c*'.|*w*'| ) pour une norme infinie, et $N 2 = \sqrt{a ′ . u {′}^{2} + b ′ . v {′}^{2} + c ′ . w {′}^{2}}$, pour une norme euclidienne.

Enfin, une détermination 180 de la position actionnée du levier 11 est réalisée à l'aide du calculateur 33 lorsque la seconde fonction prédéterminée *F2* est inférieure à un second seuil de champ magnétique

Lors de la détermination 180 de la position actionnée du levier 11, le système de contrôle 30, peut signaler que le levier 11 est à la position actionnée selon l'axe d'actionnement Z, par l'intermédiaire de l'alerteur 35, le calculateur 33 émettant un signal porteur d'une telle information vers l'alerteur 35. Alternativement, ou de façon complémentaire, le dispositif de commande 10 peut transmettre un signal porteur d'informations relatives à l'orientation estimée du levier 11 et à cette position actionnée du levier 11.

Ces étapes additionnelles 160-180 sont répétées plusieurs fois consécutivement en fonction de leur déroulement. Ces étapes additionnelles 160-180 peuvent être réalisées parallèlement aux étapes 130-150 relatives à la détection d'une anomalie sur le levier 11 ou séquentiellement à ces étapes 130-150. Aucune initialisation 100 de la durée n'est effectuée en fonction du déroulement de ces étapes additionnelles 160-180.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Dispositif de commande (10) muni d'un levier (11) articulé à un support (12), ledit levier (11) étant muni d'au moins un dipôle magnétique (14) et mobile au moins en rotation par rapport audit support (12) autour d'un axe (X,Y), ledit dispositif de commande (10) comportant un dispositif de mesure (21-23) configuré pour mesurer trois composantes d'un champ magnétique (*B*) généré par ledit au moins un dipôle magnétique (14) à une position dudit dispositif de mesure (21-23), ledit dispositif de commande (10) comportant un système de contrôle (30) pour surveiller ledit dispositif de commande (10),
**caractérisé en ce que** ledit système de contrôle (30) est configuré pour signaler une anomalie à l'aide d'un alerteur (35) lorsqu'une première fonction prédéterminée (*F1*) est supérieure à un premier seuil de champ magnétique pendant une durée supérieure à un seuil de durée, et **en ce que** ladite première fonction prédéterminée (*F1*) est une fonction desdites trois composantes mesurées d'un champ magnétique courant (*Bc*) et d'une orientation estimée dudit levier (11), ladite première fonction prédéterminée (*F1*) ayant pour valeur une première norme (*N1*) d'une première différence vectorielle entre ledit champ magnétique courant (*Bc*) et un premier champ magnétique de référence (*Bret1*) déterminé à ladite position du dispositif de mesure (21-23), ledit premier champ magnétique de référence (*Bret1*) étant relatif à ladite orientation estimée.

2. Dispositif de commande (10) selon la revendication 1,
pour lequel ledit levier (11) est de forme allongée selon un axe d'actionnement (Z) et mobile en translation selon ledit axe d'actionnement (Z) entre une position de repos et une position actionnée.

3. Dispositif de commande (10) selon la revendication 2,
configuré pour détecter que ledit levier (11) est en position actionnée lorsqu'une seconde fonction prédéterminée (*F2*) est inférieure à un second seuil de champ magnétique, ladite seconde fonction prédéterminée (*F2*) étant une fonction desdites trois composantes mesurées dudit champ magnétique courant (*Bc*) et de ladite orientation estimée dudit levier (11), ladite seconde fonction prédéterminée (*F2*) ayant pour valeur une seconde norme (*N2*) d'une seconde différence vectorielle entre ledit champ magnétique courant (*Bc*) et un second champ magnétique de référence (*Bref2*) déterminé à ladite position du dispositif de mesure (21-23), ledit second champ magnétique de référence (*Bref2*) étant relatif à ladite orientation estimée.

4. Dispositif de commande (10) selon l'une des revendications 1 à 3,
pour lequel ledit premier champ magnétique de référence (*Bret1*) relatif à ladite orientation estimée est soit déterminé par interpolation à partir de valeurs prédéterminées et mémorisées dudit premier champ magnétique de référence (*Bret1*) associées respectivement à des valeurs d'orientations de référence dudit levier (11), soit sélectionné parmi lesdites valeurs prédéterminées et mémorisées dudit premier champ magnétique de référence (*Bret1*) associées respectivement à des valeurs d'orientations de référence dudit levier (11), ladite valeur sélectionnée étant associée à ladite orientation de référence la plus proche de ladite orientation estimée.

5. Dispositif de commande (10) selon une quelconque des revendication 1 à 4,
pour lequel ladite première norme (*N1*) s'exprime pour un vecteur de cordonnées (u,v,w) selon la formule suivante max( *a.*|*u*|,*b*|*v*|,*c*.|*w*| ), où les constantes a, b et c sont strictement positives.

6. Procédé de surveillance d'un dispositif de commande (10) muni d'un levier (11) articulé à un support (12), ledit levier (11) étant muni d'au moins un dipôle magnétique (14) et mobile au moins en rotation par rapport audit support (12) autour d'un axe (X,Y), ledit dispositif de commande (10) comportant un dispositif de mesure (21-23) configuré pour mesurer trois composantes d'un champ magnétique (B) généré par ledit au moins un dipôle magnétique (14) à une position dudit dispositif de mesure (21-23),
**caractérisé en ce que** ledit procédé de surveillance comporte les étapes suivantes :
- mesure (110) desdites trois composantes d'un champ magnétique courant (Bc) par ledit dispositif de mesure (21-23),
- détermination (120) d'une orientation estimée dudit levier (11) par rapport audit support (12), en fonction desdites trois composantes par application d'une loi de transformation mémorisée,
- détermination (130) d'un premier champ magnétique de référence (Bref1) pour ladite orientation estimée à partir de valeurs prédéterminées et mémorisées dudit premier champ magnétique de référence (*Bref1*)*,* lesdites valeurs étant associées respectivement à des orientations de référence dudit levier (11),
- calcul (140) d'une première fonction prédéterminée (F1) en fonction desdites trois composantes mesurées dudit champ magnétique courant (Bc), de ladite orientation estimée dudit levier (11) et dudit premier champ magnétique de référence (Bref1) relatif à ladite orientation estimée, ladite première fonction prédéterminée (F1) ayant pour valeur une première norme (N1) d'une première différence vectorielle entre ledit premier champ magnétique de référence (Bref1) et ledit champ magnétique courant (Bc), et
- signalement (150) d'une anomalie à l'aide d'un alerteur (35) lorsque ladite première fonction prédéterminée (F1) est supérieure à un premier seuil de champ magnétique pendant une durée supérieure à un seuil de durée.

7. Procédé de surveillance selon la revendication 6, ledit levier (11) étant de forme allongée selon un axe d'actionnement (Z) et mobile en translation selon ledit axe d'actionnement (Z) entre une position de repos et une position actionnée, ledit procédé comportant les étapes additionnelles suivantes pour déterminer ladite position actionnée dudit levier (11):
- détermination (160) d'un second champ magnétique de référence (Bref2) pour ladite orientation estimée à partir de valeurs prédéterminées et mémorisées dudit second champ magnétique de référence (*Bref2*) associées respectivement à des orientations de référence dudit levier (11), ledit second champ magnétique de référence (Bref2) caractérisant ladite position actionnée selon l'axe d'actionnement (Z) dudit levier (11),
- calcul (170) d'une seconde fonction prédéterminée (F2) en fonction desdites trois composantes mesurées dudit champ magnétique courant (Bc), de ladite orientation estimée dudit levier (11) et dudit second champ magnétique de référence (Bref2), ladite seconde fonction prédéterminée (F2) ayant pour valeur une seconde norme (N2) d'une seconde différence vectorielle entre ledit second champ magnétique de référence (Bref2) et ledit champ magnétique courant (Bc),
- détermination (180) de ladite position actionnée dudit levier (11) lorsque ladite seconde fonction prédéterminée (F2) est inférieure à un second seuil de champ magnétique.

8. Procédé selon l'une quelconque des revendications 6 à 7,
pour lequel ladite détermination (130) est effectuée soit par interpolation à partir de valeurs prédéterminées et mémorisées dudit premier champ magnétique de référence (*Bret1*) associées respectivement à plusieurs valeurs d'orientations de référence dudit levier (11), soit par sélection parmi lesdites valeurs prédéterminées et mémorisées dudit premier champ magnétique de référence (*Bret1*) associées respectivement à plusieurs valeurs d'orientations de référence dudit levier (11), ladite valeur sélectionnée correspondant à ladite orientation de référence qui est la plus proche de ladite orientation estimée.

9. Procédé selon l'une quelconque des revendications 6 à 8,
dans lequel ledit signalement (150) comporte une désactivation (158) dudit levier (11) et une activation (159) d'un levier de secours (16) que comporte ledit dispositif de commande (10).

10. procédé de commande (10) selon une quelconque des revendication 6 à 9,
pour lequel ladite première norme (*N1*) s'exprime pour un vecteur de cordonnées (u,v,w) selon la formule suivante max(*a*|*u*|, *b*|*v*|, *c*|*w*| ),
où les constantes a, b et c sont strictement positives.

## Patentansprüche

1. Steuervorrichtung (10) mit einem an einer Halterung (12) angelenkten Hebel (11), wobei der Hebel (11) mit mindestens einem magnetischen Dipol (14) versehen ist und relativ zu der Halterung (12) zumindest rotatorisch um eine Achse (X, Y) beweglich ist, wobei die Steuervorrichtung (10) eine Messvorrichtung (21-23) umfasst, die ausgelegt ist, um drei Komponenten eines Magnetfelds (B) zu messen, das von dem mindestens einen Magnetdipol (14) an einer Position der Messvorrichtung (21-23) erzeugt wird, wobei die Steuervorrichtung (10) ein Überwachungssystem (30) zur Überwachung der Steuervorrichtung (10) umfasst,
**dadurch gekennzeichnet, dass** das Überwachungssystem (30) ausgelegt ist, um mithilfe einer Warnvorrichtung (35) eine Störung zu melden, wenn eine erste vorgegebene Funktion (*F1*) während einer Zeitdauer, die länger als eine Zeitschwelle ist, einen ersten Magnetfeldschwellenwert überschreitet, und dass die erste vorgegebene Funktion (*F1*) eine Funktion der drei gemessenen Komponenten eines aktuellen Magnetfelds (*Bc*) und einer geschätzten Orientierung des Hebels (11) ist, wobei die erste vorgegebene Funktion (*F1*) als Wert eine erste Norm (*N1*) einer ersten Vektordifferenz zwischen dem aktuellen Magnetfeld (*Bc*) und einem an der besagten Position der Messvorrichtung (21-23) bestimmten ersten Referenzmagnetfeld (*Bref1*) hat, wobei das genannte erste Referenzmagnetfeld (*Bref1*) auf die besagte geschätzte Orientierung bezogen ist.

2. Steuervorrichtung (10) nach Anspruch 1,
bei der der Hebel (11) von entlang einer Betätigungsachse (Z) langgestreckter Form ist und entlang dieser Betätigungsachse (Z) zwischen einer Ruhestellung und einer betätigten Stellung verschiebbar ist.

3. Steuervorrichtung (10) nach Anspruch 2,
die ausgelegt ist, um zu erkennen, dass sich der Hebel (11) in der betätigten Stellung befindet, wenn eine zweite vorgegebene Funktion (*F2*) unter einem zweiten Magnetfeldschwellenwert liegt, wobei die zweite vorgegebene Funktion (*F2*) eine Funktion der drei gemessenen Komponenten des aktuellen Magnetfelds (*Bc*) und der geschätzten Orientierung des Hebels (11) ist, wobei die zweite vorgegebene Funktion (*F2*) als Wert eine zweite Norm (*N2*) einer zweiten Vektordifferenz zwischen dem aktuellen Magnetfeld (*Bc*) und einem zweiten an der Position der Messvorrichtung (21-23) bestimmten Referenzmagnetfeld (*Bref2*) hat, wobei das zweite Referenzmagnetfeld (*Bref2*) auf die geschätzte Orientierung bezogen ist.

4. Steuervorrichtung (10) nach einem der Ansprüche 1 bis 3,
bei der das erste Referenzmagnetfeld (*Bref1*) in Bezug auf die geschätzte Ausrichtung entweder durch Interpolation aus vorgegebenen und gespeicherten Werten des ersten Referenzmagnetfelds (*Bref1*) ermittelt wird, die jeweils mit Referenzorientierungswerten des Hebels (11) verknüpft sind, oder aus den vorgegebenen und gespeicherten Werten des ersten Referenzmagnetfelds (Bref1) ausgewählt wird, die jeweils mit Referenzorientierungswerten des Hebels (11) verknüpft sind, wobei der ausgewählte Wert derjenigen Referenzorientierung zugeordnet ist, die der geschätzten Orientierung am nächsten liegt.

5. Steuervorrichtung (10) nach einem der Ansprüche 1 bis 4,
bei der die erste Norm (N7) für einen Koordinatenvektor (u, v, w) gemäß der folgenden Formel ausgedrückt wird: max(a. |u|, b.|v|, c.|w|), wobei die Konstanten a, b und c streng positiv sind.

6. Verfahren zur Überwachung einer Steuervorrichtung (10), die mit einem an einer Halterung (12) angelenkten Hebel (11) ausgestattet ist, wobei der Hebel (11) mit mindestens einem magnetischen Dipol (14) versehen ist und relativ zu der Halterung (12) zumindest rotatorisch um eine Achse (X, Y) beweglich ist, wobei die Steuervorrichtung (10) eine Messvorrichtung (21-23) umfasst, die ausgelegt ist, um drei Komponenten eines von dem mindestens einen Magnetdipol (14) an einer Position der Messvorrichtung (21-23) erzeugten Magnetfelds (B) zu messen,
**dadurch gekennzeichnet, dass** das Überwachungsverfahren die folgenden Schritte umfasst:
- Messen (110) der drei Komponenten eines aktuellen Magnetfelds *(Bc)* durch die Messvorrichtung (21-23),
- Bestimmen (120) einer geschätzten Orientierung des Hebels (11) relativ zur Halterung (12) in Abhängigkeit von den drei Komponenten durch Anwendung eines gespeicherten Transformationsgesetzes,
- Bestimmen (130) eines ersten Referenzmagnetfelds (*Bref1*) für die geschätzte Orientierung anhand vorgegebener und gespeicherter Werte des ersten Referenzmagnetfelds (*Bref1*)*,* wobei diese Werte jeweils Referenzausrichtungen des Hebels (11) zugeordnet sind,
- Berechnen (140) einer ersten vorgegebenen Funktion (F1) in Abhängigkeit von den drei gemessenen Komponenten des aktuellen Magnetfelds (Bc), der geschätzten Ausrichtung des Hebels (11) und des ersten Referenzmagnetfelds (*Bref1*) in Bezug auf die geschätzte Ausrichtung, wobei die erste vorgegebene Funktion (F1) als Wert eine erste Norm (N1) einer ersten Vektordifferenz zwischen dem ersten Referenzmagnetfeld (Bref1) und dem aktuellen Magnetfeld (Bc) aufweist, und
- Melden (150) einer Störung mittels einer Warnvorrichtung (35), wenn die vorgegebene erste Funktion (F1) während einer Dauer, die länger als eine Dauerschwelle ist, größer als ein erster Magnetfeldschwellenwert ist.

7. Überwachungsverfahren nach Anspruch 6, bei dem der Hebel (11) eine entlang einer Betätigungsachse (Z) langgestreckte Form hat und entlang dieser Betätigungsachse (Z) zwischen einer Ruhestellung und einer betätigten Stellung verschiebbar ist, wobei das Verfahren die folgenden zusätzlichen Schritte zur Bestimmung der betätigten Stellung des Hebels (11) umfasst:
- Ermitteln (160) eines zweiten Referenzmagnetfelds (Bref2) für die geschätzte Orientierung anhand vorgegebener und gespeicherter Werte des zweiten Referenzmagnetfelds (*Bref2*), die jeweils Referenzorientierungen des Hebels (11) zugeordnet sind, wobei das zweite Referenzmagnetfeld (Bref2) die Betätigungsstellung des Hebels (11) entlang der Betätigungsachse (Z) charakterisiert,
- Berechnen (170) einer zweiten vorgegebenen Funktion (F2) in Abhängigkeit von den drei gemessenen Komponenten des aktuellen Magnetfelds (Bc), der geschätzten Orientierung des Hebels (11) und des zweiten Referenzmagnetfelds (Bref2), wobei die zweite vorgegebene Funktion (F2) als Wert eine zweite Norm (N2) einer zweiten Vektordifferenz zwischen dem zweiten Referenzmagnetfeld (Bref2) und dem aktuellen Magnetfeld (Bc) hat,
- Bestimmen (180) der betätigten Stellung des Hebels (11), wenn die zweite vorgegebene Funktion (F2) kleiner als ein zweiter Magnetfeldschwellenwert ist.

8. Verfahren nach einem der Ansprüche 6 bis 7,
bei dem das Bestimmen (130) entweder durch Interpolation anhand vorgegebener und gespeicherter Werte des ersten Referenzmagnetfelds (*Bref1*) erfolgt, die jeweils mehreren Referenzorientierungswerten des Hebels (11) zugeordnet sind, entweder durch Auswählen aus den vorgegebenen und gespeicherten Werten des ersten Referenzmagnetfelds (Bref1), die jeweils mehreren Referenzausrichtungswerten des Hebels (11) zugeordnet sind, wobei der ausgewählte Wert der Referenzorientierung entspricht, die der geschätzten Orientierung am nächsten liegt.

9. Verfahren nach einem der Ansprüche 6 bis 8,
wobei das Melden (150) ein Deaktivieren (158) des Hebels (11) und ein Aktivieren (159) eines in der Steuervorrichtung (10) enthaltenen Nothebels (16) umfasst.

10. Steuerverfahren (10) nach einem der Ansprüche 6 bis 9,
bei dem sich die erste Norm (N7) für einen Koordinatenvektor (u, v, w) gemäß der folgenden Formel ausdrückt: max(a | u |, b | v |, c | w |), wobei die Konstanten a, b und c streng positiv sind.

## Claims

1. Control device (10) provided with a lever (11) articulated to a support (12), said lever (11) being provided with at least one magnetic dipole (14) and at least rotatably moveable relativeto said support (12) about an axis (X, Y), said control device (10) comprising a measuring device (21-23) configured to measure three components of a magnetic field (B) generated by said at least one magnetic dipole (14) at a position of said measuring device (21-23), said control device (10) comprising a control system (30) to monitor said control device (10),
**characterised in that** said control system (30) is configured to signal an anomaly using an alerter (35) when a first predetermined function (*F1*) is greater than a first magnetic field threshold for a duration greater than a duration threshold, and **in that** said first predetermined function (*F*1*)* is a function of said three measured components of a current magnetic field (*Bc*) and an estimated orientation of said lever (11), said first predetermined function (*F1*) having, as a value, a first norm (*N1*) of a first vectorial difference between said current magnetic field (*Bc*) and a first reference magnetic field (*Bref1*) determined at said position of the measuring device (21-23), said first reference magnetic field (*Bref1*) being relative to said estimated orientation.

2. Control device (10) according to claim 1,
for which said lever (11) is elongate in-shape along an actuation axis (Z) and translatably moveable about said actuation axis (Z) between a rest position and an actuated position.

3. Control device (10) according to claim 2,
configured to detect that said lever (11) is in an actuated position when a second predetermined function (*F2*) is less than a second magnetic field threshold, said second predetermined function (*F2*) being a function of said three measured components of said current magnetic field (*Bc*) and of said estimated orientation of said lever (11), said second predetermined function (*F2*) having, as a value, a second norm (*N2*) of a second vectorial difference between said current magnetic field (*Bc*) and a second reference magnetic field (*Bref2*) determined at said position of the measuring device (21-23), said second reference magnetic field (*Bref2*) being relative to said estimated orientation.

4. Control device (10) according to any one of claims 1 to 3,
for which said first reference magnetic field (*Bref1*) relating to said estimated orientation is either determined by interpolation from predetermined and memorised values of said first reference magnetic field (*Bref1*) associated respectively with reference orientation values of said lever (11), or selected from among said predetermined and memorised values of said first reference magnetic field (*Bref1*) associated respectively with reference orientation values of said lever (11), said selected value being associated with said reference orientation, closest to said estimated orientation.

5. Control device (10) according to any one of claims 1 to 4,
for which said first norm (*N1*) is expressed for a coordinate vector (u,v,w) according to the following formula max(*a.*|*u*l,*b.*|*v*|*,c.*|*w*|),
where the constants a, b and c are strictly positive.

6. Method for monitoring a control device (10) provided with a lever (11) articulated to a support (12), said lever (11) being provided with at least one magnetic dipole (14) and at least rotatably moveable relative to said support (12) about an axis (X, Y), said control device (10) comprising a measuring device (21-23) configured to measure three components of a magnetic field (B) generated by said at least one magnetic dipole (14) at a position of said measuring device (21-23),
**characterised in that** said monitoring method comprises the following steps:
- measuring (110) said three components of a current magnetic field (Bc) by said measuring device (21-23),
- determining (120) an estimated orientation of said lever (11) relative to said support (12), as a function of said three components by applying a memorised transformation law,
- determining (130) a first reference magnetic field (Bref1) for said estimated orientation from predetermined and memorised values of said first reference magnetic field (*Bret1*), said values being associated respectively with reference orientations of said lever (11),
- calculating (140) a first predetermined function (F1) as a function of said three measured components of said current magnetic field (Bc), of said estimated orientation of said lever (11) and of said first reference magnetic field (Bref1) relating to said estimated orientation, said first predetermined function (F1) having, as a value, a first norm (N1) of a first vectorial difference between said first reference magnetic field (Bref1) and said current magnetic field (Bc), and
- signalling (150) an anomaly using an alerter (35) when said first predetermined function (F1) is greater than a first magnetic field threshold for a duration greater than a duration threshold.

7. Method according to claim 6, said lever (11) being elongate in shape along an actuation axis (Z) and translatably moveable about said actuation axis (Z) between a rest position and an actuated position, said method comprising the following additional steps for determining said actuated position of said lever (11):
- determining (160) a second reference magnetic field (Bref2) for said estimated orientation from predetermined and memorised values of said second reference magnetic field (Bref2) associated respectively with reference orientations of said lever (11), said second reference magnetic field (Bref2) characterising said actuated position along the actuation axis (Z) of said lever (11),
- calculating (170) a second predetermined function (F2) as a function of said three measured components of said current magnetic field (Bc), of said estimated orientation of said lever (11) and of said second reference magnetic field (Bref2), said second predetermined function (F2) having, as a value, a second norm (N2) of a second vectorial difference between said second reference magnetic field (Bref2) and said current magnetic field (Bc),
- determining (180) said actuated position of said lever (11) when said second predetermined function (F2) is less than a second magnetic field threshold.

8. Method according to any one of claims 6 to 7,
for which said determination (130) is done, either by interpolation from predetermined and memorised values of said first reference magnetic field (*Bref1*) associated respectively with several reference orientation values of said lever (11), or by selection from among said predetermined and memorised values of said first reference magnetic field (*Bref1*) associated respectively with several reference orientation values of said lever (11), said selected value corresponding to said reference orientation, that is the closest to said estimated orientation.

9. Method according to any one of claims 6 to 8,
wherein said signalling (150) comprises a deactivation (158) of said lever (11) and an activation (159) of an emergency lever (16) that said control device (10) comprises.

10. Control method (10) according to any one of claims 6 to 9,
for which said first norm (N1) is expressed for a coordinate vector (u,v,w) according to the following formula *max*(α|*u*|,*b*|*v*|,*c*|*w*|),
where the constants a, b and c are strictly positive.
